(19) **Europäisches Patentamt**

**European Patent Office**

**Office européen des brevets**

(11) **EP 0 693 819 B1**

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(51) Int Cl.⁶: **H02M 3/335**

(21) Anmeldenummer: **94111189.0**

(22) Anmeldetag: **18.07.1994**

(54) **Gleichstromumrichter mit Strombegrenzung**

DC-DC converter with current limitation

Convertisseur continu-continu avec limitation de courant

(84) Benannte Vertragsstaaten:
**AT BE CH DE ES FR GB IT LI NL PT SE**

(43) Veröffentlichungstag der Anmeldung:
**24.01.1996 Patentblatt 1996/04**

(73) Patentinhaber: **SIEMENS AKTIENGESELLSCHAFT
80333 München (DE)**

(72) Erfinder: **Brakus, Bogdan, Dipl.-Ing.
D -82131 Stockdorf (DE)**

(56) Entgegenhaltungen:
**EP-A- 0 404 996          WO-A-87/03150
WO-A-91/16756**

**Beschreibung**

Die Erfindung bezieht sich auf einen wie im Oberbegriff des Patentanspruchs 1 angegebenen Gleichstromumrichter.

Ein derartiger Umrichter ist bereits aus der EP-A-526 498 bekannt. Bei dem bekannten Umrichter handelt es sich um einen getakteten Umrichter mit Strombegrenzung, der im Hauptstromkreis einen ersten elektronischen Schalter und in Serie dazu einen Meßwiderstand enthält. Zwischen dem Meßwiderstand und einem Kondensator mit Entladestromkreis befindet sich ein zweiter elektronischer Schalter, mit dessen Hilfe die stromproportionale Meßspannung ausgewertet wird. An den Kondensator ist eine Steuerschaltung angeschlossen, die den ersten elektronischen Schalter im Sinne einer Begrenzung des im Hauptstromkreis fließenden Pulsstromes steuert, sobald die Kondensatorspannung über einem vorgegebenen Grenzwert liegt. Der im übrigen gesperrte zweite elektronische Schalter wird jeweils während der Einschaltphase des ersten elektronischen Schalters in den leitenden Zustand gesteuert. Der zweite elektronische Schalter ist durch die Source-Drain-Strecke eines Feldeffekttransistors gebildet. Die Source-Drain-Strecke des Feldeffekttransistors ist derart gerichtet, daß die Inversdiode des Feldeffekttransistors in bezug auf die am Meßwiderstand auftretende Spannung in Durchlaßrichtung gepolt ist. Der Meßwiderstand ist derart bemessen, daß die an ihm abfallende Spannung kleiner ist als die Schwellenspannung der Inversdiode des Feldeffekttransistors.

Der zweite elektronische Schalter soll während der gesamten Sperrphase des ersten elektronischen Schalters ebenfalls gesperrt sein. Er kann während der gesamten Einschaltphase des ersten elektronischen Schalters ebenfalls leitend sein. Da der zu speichernde Spitzenwert der Strommeßspannung erst am Ende der leitenden Phase des ersten elektronischen Schalters entsteht, kann der zweite elektronische Schalter gegebenenfalls so angesteuert werden, daß er nur in einem zeitlichen Teilbereich der Einschaltphase des im Hauptstromkreis liegenden elektronischen Schalters leitend gesteuert ist, derart, daß beide elektronische Schalter gleichzeitig vom leitenden in den gesperrten Zustand übergehen. Auf diese Weise lassen sich Einschaltstromspitzen beim Anschalten des Kondensators reduzieren oder Spannungsspitzen ausblenden, die zu Beginn der im Hauptstromkreis fließenden Stromimpulse am Meßwiderstand auftreten.

In der EP-A1-0 404 996 ist bereits ein getakteter Umrichter bekannt, der zusätzlich zu einem im Hauptstromkreis liegenden elektronischen Schalter einen weiteren elektronischen Schalter aufweist, der zwischen einem im Hauptstromkreis liegenden Meßwiderstand und einer RC-Parallelschaltung angeordnet ist. Jener zusätzliche elektronische Schalter wird in bezug auf den erstgenannten elektronischen Schalter verzögert ein- und ausgeschaltet. Die Spannung am Kondensator folgt der Meßspannung am Meßwiderstand. Zum Zeitpunkt der verzögerten Ausschaltung des zusätzlichen elektronischen Schalters ist der Kondensator bereits entladen.

Problematisch bei getakteten Umrichtern ist ein Auslaufen der Kennlinie, bei dem die Begrenzungswirkung reduziert oder aufgehoben ist. Dies kann schließlich bis zur Zerstörung von Bauteilen führen. Die Ursache für ein derartiges Verhalten liegt in der restlichen minimalen Pulsbreite des Einschaltpulses, die sich durch eine Reihe von Totzeiten in der Steuerkette ergibt. Ist im Ausgangskreis ein LC-Glied mit einer Drossel im Längszweig und einem Kondensator im Querzweig angeordnet und ist - bedingt durch die genannte minimale Pulsbreite - die an die Ausgangsdrossel angelegte positive Spannungszeitfläche beim Einschalten größer als die negative Spannungszeitfläche in der Ausschaltphase, so steigt die magnetische Energie und damit der Strom von Periode zu Periode unbegrenzt an.

Mit Hilfe der eingangs genannten bekannten Schaltungsanordnung läßt sich das bei Umrichtern mit relativ hoher Ausgangsspannung bei der Strombegrenzung problematische sogenannte Auslaufen der Kennlinie beim Kurzschluß dadurch vermeiden, daß die Ausgangsspannung der Vorrichtung zur Spitzenwertgleichrichtung die Steuerschaltung im Sinne einer Begrenzung des im Hauptstromkreis fließenden Pulsstromes steuert.

Untersuchungen im Rahmen der Erfindung haben allerdings ergeben, daß sich unterschiedliche Steuereigenschaften der beiden elektronischen Schalter nachteilig auf die Wirksamkeit der gewünschten Strombegrenzung auswirken können. Aufgrund von Bauteiletoleranzen kann nämlich unter Umständen der Fall eintreten, daß der zweite elektronische Schalter, der die Spitzenwertgleichrichtung der impulsförmigen Strommeßspannung bewirken soll, sich zu einem Zeitpunkt noch im leitenden Zustand befindet, zu dem der erste elektronische Schalter sperrt und die Strommeßspannung somit auf den Wert null absinkt.

Aufgabe der Erfindung ist es daher, einen Umrichter der eingangs genannten Art derart auszubilden, daß sich Bauteiletoleranzen nicht nachteilig auf die Qualität der Spitzenwertgleichrichtung der Strommeßspannung auswirken.

Gemäß der Erfindung wird der Umrichter zur Lösung dieser Aufgabe in der im kennzeichnenden Teil des Patentanspruchs 1 angegebenen Weise ausgebildet. Dabei wird der zweite Transistor kurz vor oder gleichzeitig mit dem ersten Transistor abgeschaltet.

Durch die erfindungsgemäßen Maßnahmen ergibt sich in vorteilhafter Weise ein Umrichter mit Momentanwertstrombegrenzung, bei dem eine wirksame Strombegrenzung im Kurzschlußfall unabhängig von Kennwertstreuungen der beiden elektronischen Schalter sichergestellt ist. Insbesondere können sich unterschiedliche Schaltschwellen der elektronischen Schalter nicht nachteilig auf die Wirksamkeit der Kurzschlußstrombegrenzung auswirken.

Weitere vorteilhafte Ausgestaltungen der Erfindung ergeben sich aus den Unteransprüchen.

Die Erfindung wird anhand der in den Figuren 1 und 2 gezeigten Ausführungsbeispiele sowie anhand der Impulsdiagramme nach den Figuren 3 bis 6 näher erläutert.

Es zeigen

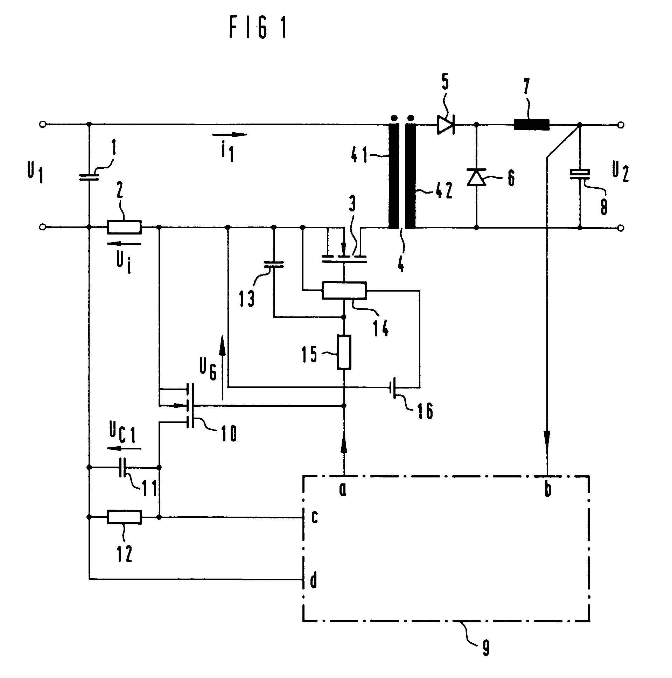

Fig. 1      einen getakteten Umrichter mit einer Vorrichtung zur Spitzenwertgleichrichtung und Ansteuerung des Leistungsschalters über ein Verzögerungsglied,

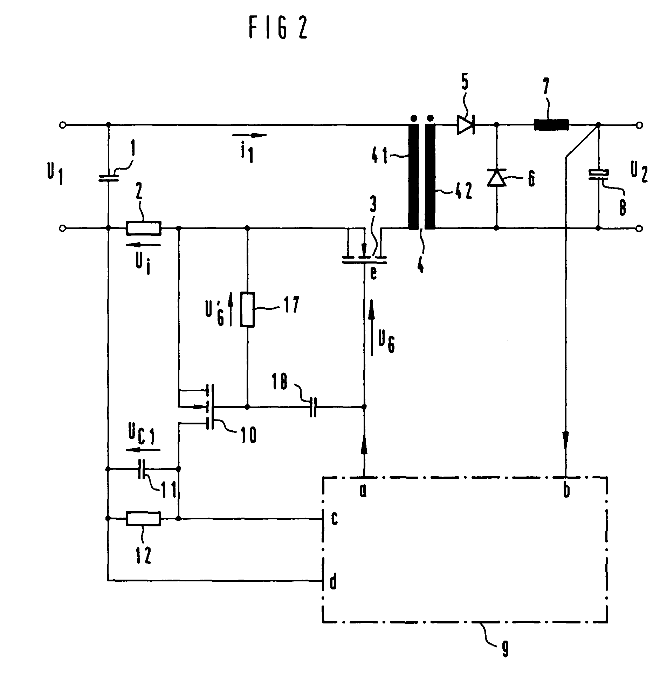

Fig. 2      einen getakteten Umrichter mit einer über ein Differenzierglied angesteuerten Vorrichtung zur Spitzenwertgleichrichtung,

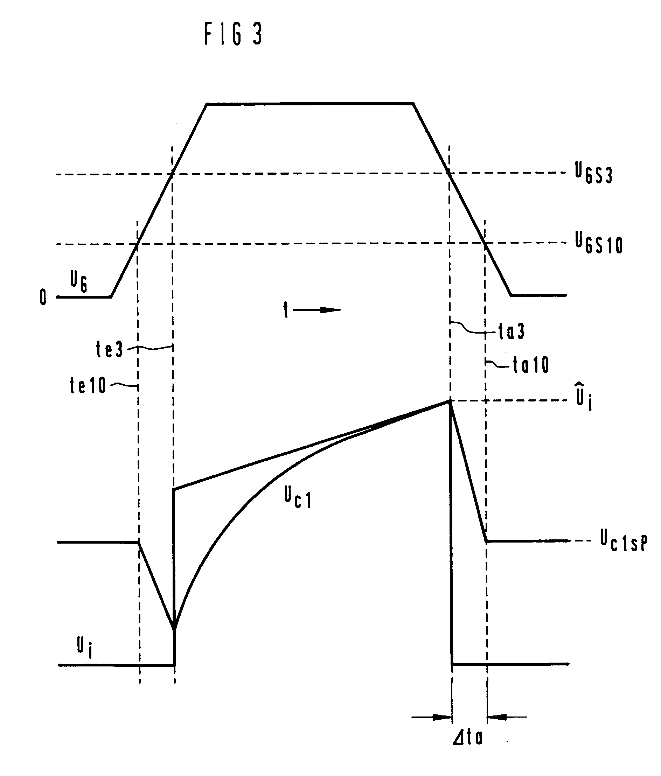

Fig. 3      ein Impulsdiagramm für einen bekannten Umrichter,

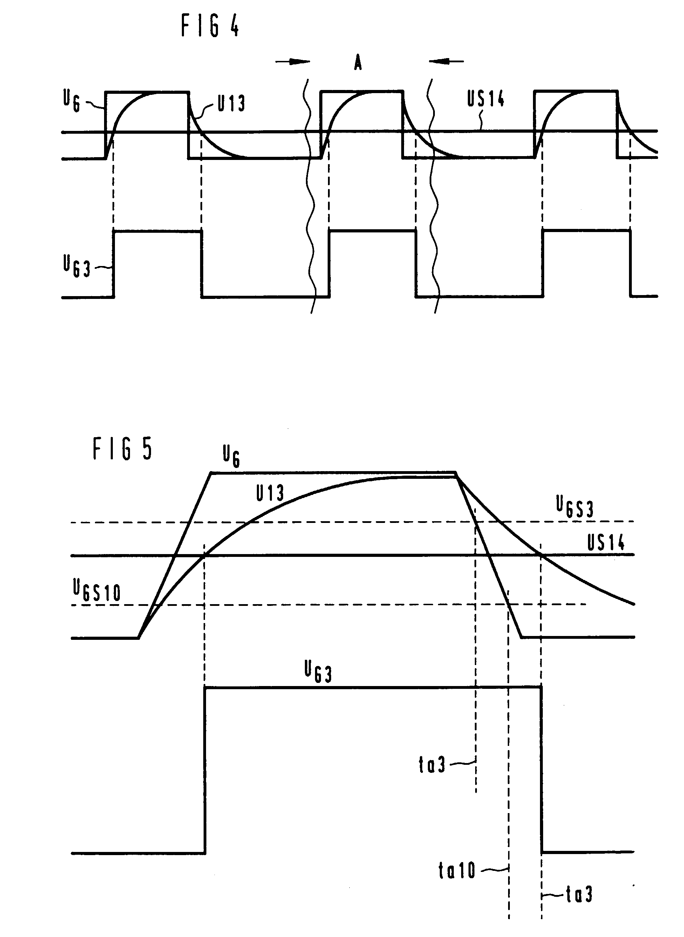

Fig. 4      ein Impulsdiagramm für den Umrichter nach Fig. 1,

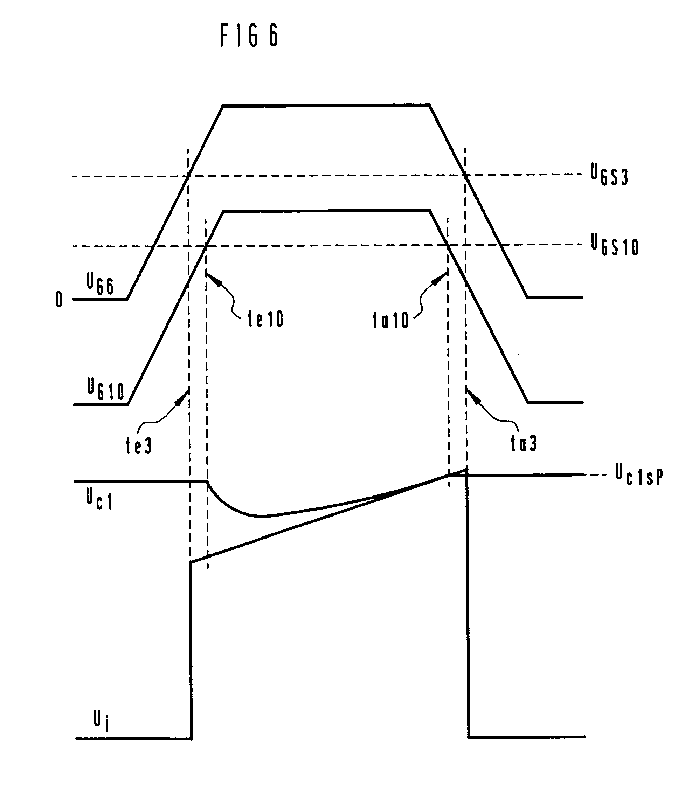

Fig. 5      einen Ausschnitt aus dem Impulsdiagramm nach Fig. 4

Fig. 6      ein Impulsdiagramm für den Umrichter nach Fig. 2,

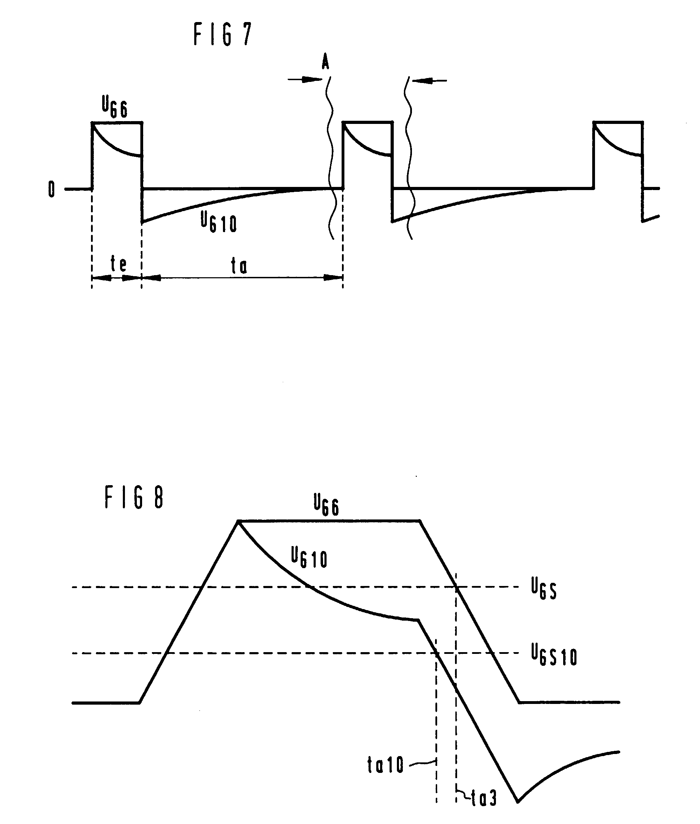

Fig. 7      ein weiteres Impulsdiagramm für den Umrichter nach Fig. 2,

Fig. 8      einen Ausschnitt aus dem Impulsdiagramm nach Fig. 7,

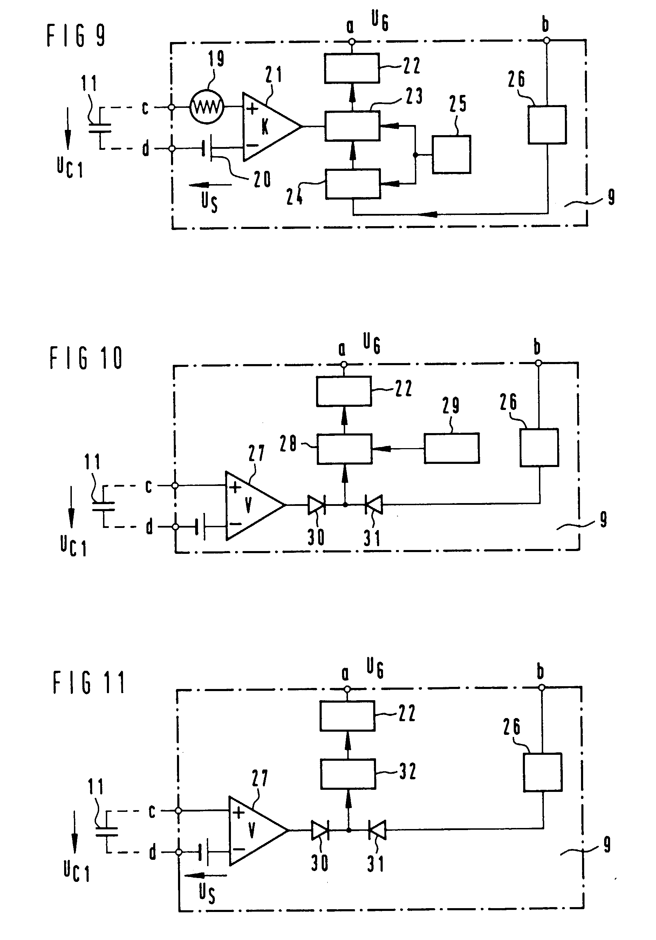

Fig. 9      eine Steuerschaltung mit einem mittels eines Komparators steuerbaren Impulsbreitenmodulator,

Fig. 10     eine Steuerschaltung mit einem im Sinne einer Ablöseregelung steuerbaren Impulsbreitenmodulator,

Fig. 11     eine Steuerschaltung mit einem im Sinne einer Ablöseregelung steuerbaren Oszillator.

In Fig. 1 ist ein getakteter Umrichter nach der Erfindung dargestellt.

Bei dem in Fig. 1 gezeigten Eintakt-Durchflußumrichter liegt die Eingangsspannung U1 am Kondensator 1 und die Ausgangsspannung U2 am Kondensator 8. Parallel zum Kondensator 1 liegt im primärseitigen Hauptstromkreis eine aus der Primärwicklung 41 des Transformators 4, der Drain-Source-Strecke des Feldeffekttransistors 3 und dem Meßwiderstand 2 gebildete Serienschaltung. Zwischen der Sekundärwicklung 42 des Transformators 4 und dem Kondensator 8 liegt die Gleichrichterdiode 5. In einem auf die Gleichrichterdiode 5 folgenden Querzweig ist die Freilaufdiode 6 angeordnet. In einem Längszweig zwischen Freilaufdiode 6 und Kondensator 8 liegt die Drossel 7.

An den Meßwiderstand 2 ist eine Auswerteanordnung angeschlossen, die aus dem Feldeffekttransistor 10, dem Kondensator 11 und dem Widerstand 12 besteht. Dabei liegt parallel zum Meßwiderstand 2 die aus dem Kondensator 11 und der Drain-Source-Strecke bestehende Serienschaltung. Der Widerstand 12 liegt parallel zum Kondensator 11.

Der Widerstand 12 bildet einen Entladestromkreis für den Kondenstor 11. Die beiden Feldeffekttransistoren 3 und 10, die als elektronische Schalter dienen, sind N-Kanal-MOS-Transistoren. Die Source-Elektroden der Feldeffekttransistoren 3 und 10 sind unmittelbar miteinander verbunden. Das Gate des Feldeffekttransistors 10 liegt unmittelbar am Steuerausgang a der Steuerschaltung 9.

Zwischen dem Ausgang a der Steuerschaltung 9 und dem Gate des Feldeffekttransistors 3 liegt eine Kettenschaltung aus dem RC-Glied 13, 15 und dem Treiber 14. Der Treiber 14 hat einen Bezugspotentialanschluß, der sowohl seinem Eingangs- als auch dem Ausgangsklemmenpaar angehört und unmittelbar mit der Source des Feldeffekttransistors 3 verbunden ist. Der gegenüber dem Bezugspotentialanschluß spannungführende Eingangsanschluß des Treibers 14 ist über den Widerstand 15 des RC-Gliedes 13, 15 an den Steuerausgang a der Steuerschaltung 9 angeschlossen. Der gegenüber dem Bezugspotentialanschluß spannungführende Ausgangsanschluß des Treibers 14 ist unmittelbar mit dem Gate des Feldeffekttransistors 3 verbunden.

Zwischen dem gegenüber dem Bezugspotentialanschluß spannungführenden Eingangsanschluß des Treibers 14 und der Source des Feldeffekttransistors 3 liegt der Kondensator 13 des RC-Gliedes 13, 15. Zwischen dem Versorgungsspannungsanschluß des Treibers 14 und der Source des Feldeffekttransistors 3 liegt die Hilfsspannungsquelle 16. Als Treiber kann z.B. ein integrierter Schaltkreis vom Typ TSC 427 dienen.

Die Steuervorrichtung 9 dient zur Regelung der Ausgangsspannung U2 auf einen konstanten Wert und ist mit ihrem Istwerteingang b an den Ausgang des Umrichters angeschlossen. Die Steuerschaltung 9 gibt an ihrem Steuerausgang a in vorgegebener Abhängigkeit von der ihrem Eingang b zugeführten Istwertspannung Einschaltimpulse an die Gate-Anschlüsse der beiden Feldeffekttransistoren 3 und 10 ab, die die beiden Feldeffekttransistoren 3 und 10 jeweils leitend steuern.

Die Steuervorrichtung 9 ist außerdem mit ihrem Steuereingang c, d an den Kondensator 11 angeschlossen. Die Steuervorrichtung 9 wertet die am Kondensator 11 liegende Spannung aus. Übersteigt die Kondensatorspannung einen vorgegebenen Wert, setzt eine Begrenzung des im primärseitigen Hauptstromkreis fließenden Stromes iI ein.

Der Transistor 10 wird durch die Steuerschaltung 9 derart gesteuert, daß er während der Einschaltphase des Transistors 3 in den leitenden Zustand gesteuert und im übrigen gesperrt ist. Mit Hilfe des Feldeffekttransistors 10 wird der Kondensator 11 niederohmig, d.h. schnell und genau auf den Maximalwert der am Meßwiderstand 2 auftretenden Spannung aufgeladen. Die im Feldeffekttransistor 10 zwangsläufig enthaltene und in der Figur nicht dargestellte, vergleichsweise langsame Inversdiode des MOS-Feldeffekttransistors 10 ist dabei praktisch wirkungslos, da ihre Schwellenspannung in Durchlaßrichtung nicht erreicht wird.

In der Sperrphase wird der Feldeffekttransistor 10 sehr schnell hochohmig und verhindert eine rückwärtige Entladung des Kondensators 11. Der Kondensator 11 kann mit der gewünschten Zeitkonstante über den Widerstand 12 entladen werden. Da der Restwiderstand $R_{DSON}$ des Feldeffekttransistors 10 sehr klein ist gegenüber dem Widerstandswert des Entladewiderstandes 12, entspricht die Spannung am Kondensator 12 sehr genau dem Maximalwert des gemessenen Stromes i1.

Im Idealfall soll sich nach dem Abschalten der beiden Transistoren 3 und 10 der Kondensator 11 nur über den Widerstand 12 entsprechend der Zeitkonstante $\tau = R17 \cdot C16$ langsam entladen. Dies setzt jedoch voraus, daß der Feldeffekttransistor 3 zeitlich vor oder gleichzeitig mit dem Feldeffekttransistor 10 sperrt.

Fig. 3 zeigt zur Veranschaulichung dieses Problems für einen bekannten getakteten Umrichter mit Momentanwertstrombegrenzung, bei dem die Erfindung nicht verwirklicht ist, ein Impulsdiagramm. Die Impulsdiagramme in den Figuren 4 bis 6 beziehen sich auf den Umrichter nach Fig. 2. In den Impulsdiagrammen bedeuten

| | |
|---|---|
| $U_G$ | Steuersignal |
| $U_{G6}$ | Steuersignal für den Feldeffekttransistor 6 |
| $U_{G10}$ | Steuersignal für den Feldeffekttransistor 10 |
| $U_{GS3}$ | Schaltschwelle des Haupttransistors |
| $U_{GS10}$ | Schaltschwelle des Gleichrichttransistors |
| $U_i$ | Meßwert des Stromes |
| $U_{C1}$ | Spannung am Speicherkondensator |
| $\hat{U}i$ | Scheitelwert des gemessenen Stromes |
| $U_{C1SP}$ | tatsächlich gespeicherter Meßwert |
| $\Delta t_a$ | Zeitdifferenz beim Ausschalten der Feldeffekttransistoren 3 und 10 |
| $t_e$ | Einschaltdauer |
| $t_{e3}$ | Einschaltzeitpunkt des Feldeffekttransistors 3 |
| $t_{e10}$ | Einschaltzeitpunkt des Feldeffekttransistors 10 |
| $t_a$ | Ausschaltdauer |
| $t_{a3}$ | Ausschaltzeitpunkt des Feldeffekttransistors 3 |
| $t_{a10}$ | Ausschaltzeitpunkt des Feldeffekttransistors 10 |

Der dem Impulsdiagramm nach Fig. 3 zugrundeliegende bekannte Umrichter ergibt sich dadurch, daß - ausgehend von dem Umrichter nach Fig. 1 - die Schaltmittel 13 und 16 weggelassen und die Schaltmittel 14 und 15 durch eine direkte Verbindung ersetzt sind. Betrachtet wird der Fall, daß sich - bedingt durch Technologie oder durch Stückstreuung - der erste Transistor 3 in seinen Steuereigenschaften vom zweiten Transistor 10 dahingehend unterscheidet, daß er eine höhere Schaltschwelle aufweist.

Da die Schaltflanken der vom Ausgang a der Steuerschaltung kommenden Steuerspannung $U_G$ eine nur endliche Steilheit besitzen, wird der Transistor 3 später eingeschaltet und früher ausgeschaltet als der Transistor 10. Kritisch für die Spitzenwertgleichrichtung ist vor allem der Unterschied der Ausschaltzeitpunkte, gegeben durch den Zeitabschnitt $\Delta t_a$, da sich während dieser Zeit der Speicherkondensator 11 über den noch leitenden Transistor 10 und den niederohmigen Widerstand 2 stark entlädt.

Der damit verbundene Pegelverlust bei der Gleichrichtung führt zum ungewollten vorzeitigen Wiedereinschalten des Transistors 3 und damit zum Auslaufen der Kennlinie beim Kurzschluß, was durch die Kurzschlußstrombegrenzung gerade verhindert werden soll. Ist die Entladung des Kondensators 11 im ungünstigsten Fall vollständig, findet überhaupt keine Speicherung des Meßwerts statt.

Die im getakteten Umrichter nach Fig. 1 enthaltene Vorrichtung zur Impulsverarbeitung, die das RC-Glied 13, 15 enthält, stellt dagegen sicher, daß der Transistor 10 kurz vor dem Transistor 3 oder gleichzeitig mit dem Transistor 3 gesperrt wird. Das Impulsdiagramm nach Fig. 4 und der in Fig. 5 gezeigte Ausschnitt aus Fig. 4 zeigen dieses Ergebnis. In den Figuren 4 und 5 bedeuten

| | | |
|---|---|---|
| UG | Ausgangsspannung der Steuerung 9 | |
| U13 | Verzögertes Signal am Kondensator 13 | |
| $U_{G3}$ | Ausgangsspannung des Treibers 14 = $U_{GS}$ von 3 | |
| $U_{GS3}$ | Gate/Source-Spannungsquelle von 3 | |
| $U_{GS10}$ | "      "      von 10 | |
| $t_{a3'}$ | Abschaltzeitpunkt von 3 vor den Verbesserungen | |
| $t_{a10}$ | "      von 10 | |
| $t_{a3}$ | "      von 3 nach der Verbesserung | |
| $U_{S14}$ | Schaltschwellspannung des Treibers 14 | |

Während die Spannung $U_G$ den Ladetransistor 10 direkt steuert, wird über die verzögernde Wirkung RC-Glieds 15, 13 der Treiber 14 nachlaufend ein- und ausgeschaltet. Die Schaltzeitzuordnung während des Einschaltvorgangs ist praktisch unbedeutend bei der Spitzenwertgleichrichtung. Die Ausschaltverzögerung vom Transistor 3 von $t_{a3'}$ auf $t_{a3}$ hingegen, stellt sicher, daß der Transistor 10 vor Transistor 3 abgeschaltet wird. Damit bleibt der Spitzenwert gespeichert.

Mit Hilfe der durch das RC-Glied 13, 15 gebildeten Verzögerungsschaltung wird erreicht, daß die dem Transistor 3 zugeführten und den Transistors 3 leitend steuernden Einschaltimpulse gegenüber den Einschaltimpulsen verzögert sind, die dem Transistor 10 zugeführt werden.

Die Kapazität des Kondensators 13 und der Widerstandswert des Widerstandes 15 sind so bemessen, daß die Zeitkonstante des RC-Gliedes 13, 15 etwa so groß ist wie die sich aufgrund der Bauteiletoleranzen ergebende maximale Zeitdifferenz $\Delta t_a$ nach Fig. 3. Somit gilt

$$R_V \cdot C_V \approx \Delta t_a.$$

Auf diese Weise wird erreicht, daß der Transistor 3 frühestens zur gleichen Zeit in den gesperrten Zustand übergeführt wird wie der Feldeffekttransistor 10. Eine ungewollte Entladung des Kondensators 11 ist sicher vermieden.

Der zwischen dem Gate des Transistors 3 und dem Verzögerungsglied 13, 15 eingefügte Treiber 14 ist insbesondere zusätzlich zu einem in der Steuerschaltung 9 enthaltenen, in der Figur nicht dargestellten Treiber vorgesehen. Der Treiber 14 vermeidet, daß die durch das RC-Glied bedingte Verlangsamung der Ein- und Ausschaltvorgänge beim Transistor 3 zu einer Erhöhung der Schaltverluste führen.

Der Treiber 14 kann gegebenenfalls durch eine direkte Verbindung zwischen Widerstand 15 und Gate des Feldeffekttransistors 3 ersetzt sein, wenn die mit dieser Maßnahme verbundene Erhöhung der Schaltverluste in Kauf genommen werden kann.

Bei dem Umrichter nach Fig. 2 wird das rechtzeitige Sperren des Feldeffekttransistors 10 durch eine Steuerpegelverschiebung mit Hilfe des Differenziergliedes 17, 18 erreicht.

Der Umrichter nach Fig. 2 stimmt mit dem nach Fig. 1 weitgehend überein. Abweichend ist anstelle des RC-Gliedes 13, 15 und des Treibers 14 ein Differenzierglied vorgesehen. Dieses Differenzierglied besteht aus dem Widerstand 17 und dem Kondensator 18. Der Widerstand 17 liegt parallel zur Gate-Source-Strecke des Feldeffekttransistors 10. Der Kondensator 18 liegt zwischen dem Steuerausgang a der Steuerschaltung 9 und dem Gate des Feldeffekttransistors 10. Das Gate des Feldeffekttransistors 3 ist unmittelbar mit dem Steuerausgang a verbunden.

Wie das Impulsdiagramm nach Fig. 6 zeigt, verschiebt sich die Steuerspannung $U_{G10}$ durch die Wirkung des Differenziergliedes 17, 18 gegenüber dem Steuersignal $U_{G3}$, das den Transistor 3 direkt steuert, in Richtung zu kleineren Werten hin. Dadurch schaltet der Feldeffekttransistor 10 später ein und früher aus als der Feldeffekttransistor 3. Die Folge ist der praktisch ideal gespeicherte Spitzenwert der Strommeßspannung im Kondensator 11. Eine ungewollte Entladung kann nicht stattfinden. Diese Maßnahme ist bei vergleichsweise geringem Aufwand hoch wirksam, da es sich in der Praxis um relativ kleine Pegelunterschiede von ca. 1-2 V bei einer Amplitude von ca. 10 V handelt.

Die Zeitkonstante des Differenziergliedes $\tau = R_D \cdot C_D$ wird insbesondere so gewählt, daß sie viel größer ist als die zu erwartende Taktfrequenz. Wählt man die Zeitkonstante so, daß sie wenigstens annähernd der Einschaltzeit des ersten Feldeffekttransistors 3 entspricht, so lassen sich auch beliebige Puls-Pause-Verhältnisse beherrschen. Fig. 7 und 8 zeigen ein Impulsdiagramm für den Fall, daß die Einschaltzeit relativ kurz und die Ausschaltzeit relativ lang ist.

Die Umrichter nach den Figuren 1 und 2 enthalten als elektronische Schalter jeweils einen Feldeffekttransistor 3, 10. In entsprechender Weise können anstelle des Feldeffekttransistors 3 gegebenenfalls elektronische Schalter anderer Art, insbesondere bipolare Transistoren oder sogenannte IGBT (Isolated Gate Bipolar Transistor) Verwendung finden.

Bei den Umrichtern nach Fig. 1 und 2 dient die Steuervorrichtung 9, die mit ihrem Istwerteingang b an den Ausgang des Umrichters angeschlossen ist und die an ihrem Steuerausgang a Einschaltimpulse abgibt, die die beiden elektronischen Schalter des Umrichters jeweils leitend steuern, jeweils zur Regelung der Ausgangsspannung U2. In den Figuren 9 bis 11 sind bevorzugte Ausführungen der Steuerschaltung 9 angegeben.

Die Steuerschaltung nach Fig. 9 enthält den Spannungsregler 26, den Pulsweitenmodulator 24, die Logikschaltung 23 und den Treiber 22.

Bei der Steuerschaltung 9 nach Fig. 9 werden die Logikschaltung 23 und der Pulsweitenmodulator 24 durch den Taktgeber 25 gemeinsam gesteuert. Die Logikschaltung 23 ist außerdem mit einem Sperreingang an den Ausgang des Komparators 21 angeschlossen, der die Sollspannung $U_S$ des Sollspannungsgebers 20 mit einer Summenspannung vergleicht, die aus der am Kondensator 11 liegenden Spannung $U_{C1}$ und der Dreieckspannung des Dreieckspannungsgebers 19 besteht. Der Dreieckspannungsgeber 19 kann gegebenenfalls anstatt im Istwertzweig im Sollwert zweig und bei entsprechender Wahl des Arbeitsbereiches durch einen Kurzschluß ersetzt werden.

Die Ausgangsspannung $U_G$ des Treibers 22 besteht aus Einschaltimpulsen, die den Gate-Source-Strecken der Feldeffekttransistoren 3 und 10 zugeführt werden. Die Spannung $U_i$ fällt am Meßwiderstand 3 ab und entspricht dem im Hauptstromkreis des Umrichters fließenden Strom il. Am Kondensator 11 ergibt sich die Spannung $U_{C1}$. Die Ausgangsspannung $U_{KA}$ des Komparators 21 ist eine Folge von Rechteckimpulsen. Die Anstiegsflanke stellt den Beginn eines Sperrsignals, die Abstiegsflanke den Beginn eines Freigabesignales dar. Die kurzzeitige Entladung des Kondensators 11 zu Beginn des Pulses, verursacht durch den schrägen Anstieg de Stromes il, ist praktisch bedeutungslos, da der Spitzenwert des Stromes il erst am Ende der leitenden Phase entsteht und nach dem Abschalten gespeichert bleibt.

Die Spannung am Kondensator 11 wird mit Hilfe des Komparators 21 ausgewertet. Die Dreieckspannungsquelle 19 liefert ein externes synchrones Dreiecksignal, das der Spannung $U_{C1}$ überlagert wird. Durch diese Überlagerung eines synchronen Dreieckssignals wird zum einen ein definiertes Schaltkriterium gewonnen, zum anderen wird die Stabilität im subharmonischen Bereich erhöht.

Die Zahl der im Kurzschlußfall ausgelassenen Impulse hängt von der minimalen Pulsbreite und der Durchlaßspannung der Freilaufdiode 6 nach Fig. 1 oder 2 ab.

Bei der Steuerschaltung nach Fig. 10 ist anstelle des Komparators 21 in Fig. 7 der Operationsverstärker 27 vorgesehen. Der Ausgang des Operationsverstärkers 27 und der Ausgang des Spannungsreglers 26 sind über je eine Diode 30 bzw. 31 an den Eingang des Pulsbreitenmodulators 28 geführt, so daß sich eine sogenannte Ablöseregelung ergibt. Der Treiber 22 ist unmittelbar an den Impulsbreitenmodulator 28 angeschlossen.

Bei dieser Ausführungsform steuert die verstärkte Regelabweichung den Pulsbreitenmodulator 28 und stellt den Arbeitspunkt ein. Im Kurzschlußfall kann die vom Operationsverstärker 27 verstärkte Regelabweichung bei Bedarf den Pulsbreitenmodulator 28 für mehrere Perioden sperren und dadurch die Begrenzungswirkung voll aufrechterhalten.

Die in Fig. 9 dargestellte Ausführungsform der Steuerschaltung 9 ist besonders bei Hochfrequenzumrichtern von Vorteil. Im Überlastfall verstärkt der Operationsverstärker 27 die Regelabweichung $U_S$-$U_{C1}$ und steuert den spannungsgesteuerten Oszillator 32 zu niedrigeren Frequenzen hin. Die Einschaltdauer des Strompulses bleibt zwar konstant. Durch stetige Frequenzreduzierung wird jedoch der gewünschte Gleichgewichtszustand auch bei einem Kurzschluß der Ausgangsklemmen des Umrichters erzielt.

Die in den Figuren 1 und 2 dargestellten Umrichter mit einer Steuerschaltung 9 nach Fig. 9, 10 oder 11 sind in einem sehr weiten Frequenzbereich einsetzbar, da der Feldeffekttransistor ein kleiner MOS-Transistor mit Schaltzeiten von etwa 5-20 ns sein und sehr geringe parasitäre Kapazitäten, z.B. etwa 5 pF besitzen kann. Die Schaltfrequenz kann dabei etwa 1-2 MHz betragen.

Der Umrichter kann als Durchfluß- oder als Sperrumrichter mit konstanter Taktfrequenz oder als Umrichter mit Frequenzmodulation ausgebildet sein.

Eine Stromregelung mit überlagerter Spannungsregelung (Current-Mode-Spannungsregelung), bei der als Sollwert des Stromes das Ausgangssignal eines Spannungsreglers dient, ist mit Hilfe des Meßsignals am Strommeßwiderstand 3 ohne weiteres möglich, da das Signal am niederohmigen Meßwiderstand 3 auch in den für die Regelung wesentlichen Zeitabschnitten praktisch nicht verfälscht wird.

**Patentansprüche**

1. Getakteter Umrichter mit Strombegrenzung, mit einem im Hauptstromkreis angeordneten und mit seinem Steuereingang an den Ausgang (a) einer Steuerschaltung (9) angeschlossenen und durch die Steuerschaltung (9) abwechselnd ein- und ausschaltbaren ersten elektronischen Schalter (3), mit einem in Serie zum ersten elektronischen Schalter (3) angeordneten Meßwiderstand (2), mit einer Vorrichtung zur Spitzenwertgleichrichtung, die einen zwischen dem Meßwiderstand (2) und einem Kondensator (11) mit Entladestromkreis (12) angeordneten, jeweils während der Einschaltphase des ersten elektronischen Schalters (3) in den leitenden Zustand steuerbaren zweiten elektronischen Schalter (10) enthält, wobei der erste elektronische Schalter (3) durch die Steuerschaltung (9) in Abhängigkeit von der Ausgangsspannung ($U_{C1}$) der Vorrichtung zur Spitzenwertgleichrichtung im Sinne einer Begrenzung des im Hauptstromkreis fließenden Pulsstromes steuerbar ist,
**dadurch gekennzeichnet,**
zwischen einem Ausgang der Steuerschaltung (9) und den Steuereingängen der beiden elektronischen Schalter (3, 10) eine Vorrichtung zur Impulsverarbeitung angeordnet ist, und daß die Vorrichtung zur Impulsverarbeitung an die beiden elektronischen Schalter (3, 10) derart zeitlich versetzte und/oder geformte Impulse abgibt, daß der zweite elektronische Schalter (10) früher oder gleichzeitig mit dem ersten elektronischen Schalter (3) in den gesperrten Zustand überführt wird.

2. Umrichter nach Anspruch 1,
**dadurch gekennzeichnet,**
daß der Steuereingang des zweiten elektronischen Schalters (10) unmittelbar am Ausgang der Steuerschaltung (9) liegt, und daß zwischen dem Ausgang (a) der Steuerschaltung (9) und dem Steuereingang des ersten elektronischen Schalters (3) eine Verzögerungsschaltung (13, 15) angeordnet ist.

3. Umrichter nach Anspruch 2,
**dadurch gekennzeichnet,**
daß die Verzögerungsschaltung durch ein RC-Glied (15, 13) gebildet ist, dessen Widerstand (15) zwischen dem Ausgang der Steuerschaltung (9) und dem Steuereingang des ersten elektronischen Schalters (3) liegt und dessen Kondensator (13) parallel zum Steuereingang des elektronischen Schalters (3) angeordnet ist.

4. Umrichter nach Anspruch 3,
**dadurch gekennzeichnet,**
daß die Zeitkonstante des RC-Gliedes (15, 13) derart bemessen ist, daß der zweite elektronische Schalter (10) mit Sicherheit zu einem früheren Zeitpunkt in den gesperrten Zustand überführt wird als der erste elektronische Schalter (3).

5. Umrichter nach einem der Ansprüche 2 bis 4,
**dadurch gekennzeichnet,**
der erste elektronische Schalter (3) mit einem Treiber (14) versehen ist, und daß parallel zum Kondensator (13) des RC-Gliedes (15, 13) die Serienschaltung aus einer Steuerstrecke des elektronischen Schalters (3) und einem aus dem Eingang und dem Ausgang bestehenden Klemmenpaar (e, f) des Treibers (14) liegt.

6. Umrichter nach Anspruch 1,

**dadurch gekennzeichnet,**
daß zwischen dem Ausgang der Steuerschaltung (9) und dem Steuereingang des zweiten elektronischen Schalters (10) ein Differenzierglied (17, 18) angeordnet ist.

7. Umrichter nach Anspruch 6,
**dadurch gekennzeichnet,**
daß die Zeitkonstante des Differenziergliedes (17, 18) derart bemessen ist, daß sie viel größer ist als die maximal zu erwartende Impulsfolgefrequenz, mit der die Einschaltimpulse aufeinanderfolgen.

8. Umrichter nach Anspruch 7,
**dadurch gekennzeichnet,**
daß die Zeitkonstante des Differenziergliedes (17, 18) wenigstens näherungsweise derart bemessen ist, daß sie der Einschaltzeit des ersten elektronischen Schalters (3) entspricht.

9. Umrichter nach einem der Ansprüche 1 bis 8,
**dadurch gekennzeichnet,**
daß die beiden elektronischen Schalter (3, 10) Feldeffekttransistoren (3, 10) vom gleichen Leitfähigkeitstyp sind und daß gleichnamige Anschlüsse (Source) der beiden Feldeffekttransistoren (3, 10) und der Strommeßwiderstand (2) miteinander verbunden sind und daß die Gate-Elektroden der beiden Feldeffekttransistoren (3, 10) an die Vorrichtung zur Impulsverarbeitung angeschlossen sind.

**Claims**

1. Switched-mode converter with current limitation, having a first electronic switch (3), which is arranged in the main circuit, connected by its control input to the output (a) of a control circuit (9) and can be switched on and off alternately by means of the control circuit (9), having a measurement resistor (2) which is arranged in series with the first electronic switch (3), having a device for peak-value rectification, which contains a second electronic switch (10) which is arranged between the measuring resistor (2) and a capacitor (11) with discharge circuit (12) and which can be changed into the conductive state in each case during the switch-on phase of the first electronic switch (3), it being possible to control the first electronic switch (3) by means of the control circuit (9) as a function of the output voltage ($U_{C1}$) of the device for peak-value rectification in order to limit the pulse current flowing in the main circuit, characterized in that a device for processing pulses is arranged between one output of the control circuit (9) and the control inputs of the two electronic switches (3, 10), and in that the device for processing pulses outputs to the two electronic switches (3, 10) pulses which are offset in terms of timing, and/ or shaped, in such a way that the second electronic switch (10) is changed into the blocked state earlier than, or at the same time as, the first electronic switch (3).

2. Converter according to Claim 1, characterized in that the control input of the second electronic switch (10) is connected directly to the output of the control circuit (9), and in that a delay circuit (13, 15) is arranged between the output (a) of the control circuit (9) and the control input of the first electronic switch (3).

3. Converter according to Claim 2, characterized in that the delay circuit is formed by an RC element (15, 13) whose resistor (15) is connected between the output of the control circuit (9) and the control input of the first electronic switch (3) and whose capacitor (13) is arranged parallel to the control input of the electronic switch (3).

4. Converter according to Claim 3, characterized in that the timing constant of the RC element (15, 13) is dimensioned in such a way that the second electronic switch (10) is reliably changed into the blocked state at an earlier time than the first electronic switch (3).

5. Converter according to one of Claims 2 to 4, characterized in that the first electronic switch (3) is provided with a driver (14), and in that the series circuit, composed of a controlled element of the electronic switch (3) and a pair of terminals (e, f) of the driver (14) which comprise the input and the output, is connected parallel to the capacitor (13) of the RC element (15, 13).

6. Converter according to Claim 1, characterized in that a differentiating element (17, 18) is arranged between the output of the control circuit (9) and the control input of the second electronic switch (10).

7. Converter according to Claim 6, characterized in that the timing constant of the differentiating element (17, 18) is dimensioned in such a way that it is much greater than the maximum expected pulse sequence frequency at which the switch-on pulses successively occur.

8. Converter according to Claim 7, characterized in that the timing constant of the differentiating element (17, 18) is dimensioned at least approximately in such a way that it corresponds to the switch-on time of the first electronic switch (3).

9. Converter according to one of Claims 1 to 8, characterized in that the two electronic switches (3, 10) are field-effect transistors (3, 10) of the same conductivity type, and in that like terminals (source) of the two field-effect transistors (3, 10) and the current measuring resistor (2) are connected to one another, and in that the gate electrodes of the two field-effect transistors (3, 10) are connected to the device for processing pulses.

## Revendications

1. Convertisseur rythmé avec limitation de courant, avec une première bascule électronique placée dans le circuit principal et raccordée par son entrée de commande à la sortie (a) d'un circuit de commande (9) et qui peut être alternativement basculée passante / non passante par le circuit de commande (9), avec une résistance de mesure (2) placée en série avec la première bascule électronique (3), avec un dispositif pour le redressement de la valeur de crête qui comprend une deuxième bascule électronique (10), placée entre une résistance de mesure (2) et un condensateur (11) avec circuit de décharge (12) et qui peut être basculée dans son état passant pendant chaque phase passante de la première bascule électronique (3), la première bascule électronique (3) obéissant au circuit de commande (9) dans le sens d'une limitation du courant pulsé circulant dans le circuit principal et ceci en fonction de la tension de sortie ($U_{C1}$) du dispositif de redressement de la valeur de crête,
   **caractérisé par**
   le fait qu'un dispositif de traitement des impulsions est placé entre une sortie du circuit de commande (9) et les entrées de commande des deux bascules électroniques (3, 10) et le fait que le dispositif de traitement des impulsions fournit aux deux bascules électroniques (3, 10) des impulsions décalées dans le temps et/ou à forme modifiée de telle sorte que la deuxième bascule électronique (10) est basculée dans son état non passant avant ou en même temps que la première bascule électronique.

2. Convertisseur conforme à la revendication 1,
   **caractérisé par**
   le fait que l'entrée de commande de la deuxième bascule électronique (10) se trouve directement à la sortie du circuit de commande (9) et par le fait qu'un circuit de temporisation (13, 15) est placé entre la sortie (a) du circuit de commande (9) et l'entrée de commande de la première bascule électronique (3).

3. Convertisseur conforme à la revendication 2,
   **caractérisé par**
   le fait que le circuit de temporisation est formé par un circuit RC (15, 13) dont la résistance (15) est placée entre la sortie du circuit de commande (9) et l'entrée de commande de la première bascule électronique (3) et dont le condensateur (13) est disposé en parallèle sur l'entrée de commande de la bascule électronique (3).

4. Convertisseur conforme à la revendication 3,
   **caractérisé par**
   le fait que la constante de temps du circuit RC (15, 13) est dimensionnée de telle sorte que la deuxième bascule électronique (10) est basculée avec certitude dans son état non passant à un moment antérieur au basculement de la première bascule électronique (3).

5. Convertisseur conforme à une des revendications 2 à 4,
   **caractérisé par**
   le fait que la première bascule électronique (3) est équipée d'un circuit d'attaque (14) et par le fait que, en parallèle sur le condensateur (13) du circuit RC (15, 13), se trouve le circuit série constitué par une ligne de commande de la bascule électronique (3) et une paire de bornes (e, f) du circuit d'attaque (14) se composant de l'entrée et de la sortie.

6. Convertisseur conforme à la revendication 1,
   **caractérisé par**
   le fait qu'un élément de différentiation (17, 18) est placé entre la sortie du circuit de commande (9) et l'entrée de commande de la deuxième bascule électronique (10).

7. Convertisseur conforme à la revendication 6,
   **caractérisé par**
   le fait que la constante de temps de l'élément de différentiation (17, 18) est dimensionnée de telle sorte qu'elle est nettement supérieure à la fréquence maximum attendue avec laquelle les impulsions de commutation se succèdent.

8. Convertisseur conforme à la revendication 7,
   **caractérisé par**
   le fait que la constante de temps de l'élément de différentiation (17, 18) est au moins approximativement dimensionnée de telle sorte qu'elle correspond à la durée de phase passante de la première bascule électronique (3).

9. Convertisseur conforme à une des revendications 2 à 4,
   **caractérisé par**
   le fait que les deux bascules électroniques (3, 10) sont des transistors à effet de champ (3, 10) du même modèle de conductibilité et par le fait que les raccordements (source) de même nom des deux transistors à effet de champ (3, 10) et la résistance de mesure du courant (2) sont reliés ensemble et par le fait que les électrodes de grille des deux transistors à effet de champ (3, 10) sont raccordées au

**EP 0 693 819 B1**

dispositif de traitement des impulsions.

FIG 1

FIG 2

FIG 3

FIG 4

$U_6$  $U_{13}$  $US_{14}$  A

$U_{63}$

FIG 5

$U_6$  $U_{13}$  $U_{6S3}$  $US_{14}$  $U_{6S10}$

$U_{63}$

$ta3$  $ta10$  $ta3$

13

FIG 6

# F I G 7

$U_{66}$

A

0

$U_{610}$

te

ta

# F I G 8

$U_{66}$

$U_{610}$

$U_{6S}$

$U_{6S10}$

ta10

ta3

EP 0 693 819 B1

FIG 9

FIG 10

FIG 11